# EUROPEAN PATENT SPECIFICATION

(11) **EP 3 935 016 B1**
(45) Date of publication and mention of the grant of the patent: **31.12.2025**
(21) Application number: 20720643.4
(22) Date of filing: 26.03.2020
(51) Int. Cl.: C02F 1/28, B01J 20/34, C02F 1/32, C02F 1/72, C02F 1/78, C02F 3/12, C02F 3/00, C02F 11/08, C02F 3/10, B01J 20/20

(54) **SYSTEM FOR REDUCING TOTAL CARBON CONSUMPTION IN THE GENERATION OF LOW CHEMICAL OXYGEN DEMAND TREATED STREAMS**
SYSTEM ZUR VERRINGERUNG DES GESAMTVERBRAUCHS AN KOHLE BEI DER HERSTELLUNG VON MIT NIEDRIGEM CHEMISCHEN SAUERSTOFFBEDARF BEHANDELTEN STRÖMEN
SYSTÈME POUR RÉDUIRE LA CONSOMMATION TOTALE DE CHARBON DANS LA PRODUCTION DE FLUX TRAITÉS À FAIBLE DEMANDE CHIMIQUE EN OXYGÈNE

(30) Priority: 05.04.2019 US 201962829948 P
(43) Date of publication of application: 12.01.2022
(73) Proprietor: Lummus Technology LLC, Houston, TX 77086 (US)
(72) Inventor: LARSON, Simon, Wausau, Wisconsin 54401 (US)
(74) Representative: HKW Intellectual Property PartG mbB
(86) International application number: PCT/US2020/025006
(87) International publication number: WO 2020/205438

(56) References cited:
- WO-A1-2018/044679
- US-A- 3 977 966
- US-A- 5 302 288
- US-A1- 2003 159 988
- US-A1- 2007 209 999
- US-A1- 2009 289 011
- US-A1- 2014 061 134

## Description

### FIELD

This invention relates to treatment processes and systems, and in particular to processes and systems which reduce total activated carbon consumption utilized to produce low chemical oxygen demand (COD) treated streams.

### BACKGROUND

Wastewater streams are commonly treated by a wide variety of processes in order to remove organics, solids, and any other undesirable contaminants therefrom. For example, wastewater streams may be contacted with activated carbon for a time effective to remove an amount of chemical oxygen demand (COD) therefrom. In some instances, activated carbon is further combined with biological material, the latter of which is suitable for the removal of readily biodegradable organics from the wastewater stream. Globally, wastewater streams are requiring lower maximum allowable levels of COD and like contaminants. To arrive at these lower levels (e.g., < 50 mg/L COD), in many instances, two activated carbon stages (activated carbon in two or more separate vessels) may be provided in series to achieve the desired lower COD concentration.

Having two activated carbon stages, however, requires a significant overall or total carbon consumption in the associated system and process, which requires significant cost, storage, and transportation of materials. To reduce the total carbon consumption, spent activated carbon from the stages may be regenerated by wet air oxidation (WAO) at an elevated temperature, elevated pressure, and in the presence of an oxygen-containing gas. This recycling of the carbon will lower the amount of fresh carbon needed. However, the total carbon consumption needed in a two stage system to reduce COD levels below their maximum allowable limit for most commercial applications is typically too great for a single WAO unit. Due to the proliferation of large industrial park wastewater complexes or integrated refinery facilities coupled with decreasing effluent limits, the WAO unit has become excessively large or requires two units. The repeated addition of significant fresh activated carbon and/or the addition of a second WAO unit can significantly increase the costs of the associated system or process.

Further prior art may be found in US 2009/289011 A1, US 2014/061134 A1, US 2007/209999 A1, US 3 977 966 A, US 2003/159988 A1, WO 2018/044679 A1 and US 5 302 288 A.

### SUMMARY

The present invention is defined by the water treatment system according to independent claim 1. Also, the present invention is defined by the subject matter of the dependent claims.

The present inventors have developed systems and processes for reducing the overall carbon consumption needed for the generation of low COD treated water. In certain aspects, the systems and processes described herein include an oxidation stage (e.g., one that utilizes ozone, hydrogen peroxide, ultraviolet, or any other suitable oxidant/oxidizing agent or a combination thereof for oxidation) between a first activated carbon stage and a second activated carbon stage to reduce a total carbon consumption within the associated system or process. Without wishing to be bound by theory, it is believed that oxidation between the two activated carbon stages may significantly reduce total activated carbon needed to achieve low COD (< 50 mg/L) treated wastewater. In certain embodiments, the presence of the oxidation stage reduces a total carbon consumption by 25 % by mass or greater.

In accordance with another aspect, the systems and processes described herein utilize two or more carbon stages, each comprising a combination of activated carbon and biomass to reduce chemical oxygen demand (COD) in a wastewater stream. The presence of an oxidation stage which oxidizes a treated stream from a first carbon stage (comprising biomass) results is an increased fraction of biodegradable COD and/or an overall decrease in COD, relative to the first treated stream. This allows the COD concentration to be more easily reduced in the second carbon stage by biomass therein, thereby reducing the carbon required in the second stage and the total carbon consumption of the system.

### BRIEF DESCRIPTION

FIG. 1 illustrates a wastewater treatment system for reducing total carbon consumption in the treatment of wastewater to low chemical oxygen demand (COD) concentrations.
FIG. 2 illustrates a first carbon stage in a system not in accordance with the present invention and is present for illustration purposes only.
FIG. 3 illustrates an embodiment of a membrane bioreactor first carbon stage in the system in accordance with an aspect of the present invention.
FIG. 4 illustrates an embodiment of a system carbon stage in a system in accordance with an aspect of the present invention.
FIG. 5 illustrates a wastewater treatment system for reducing total carbon consumption in the treatment of wastewater to low chemical oxygen demand (COD) concentrations.
FIG. 6 illustrates the movement of materials through a wastewater treatment system.
FIG. 7 illustrates a wastewater treatment system further comprising a wet air oxidation unit in accordance with an aspect of the present invention.
FIG. 8 illustrates a wastewater treatment system further comprising a wet air oxidation unit.
FIG. 9 illustrates a wastewater treatment system further comprising a purge and storage system.

### DETAILED DESCRIPTION

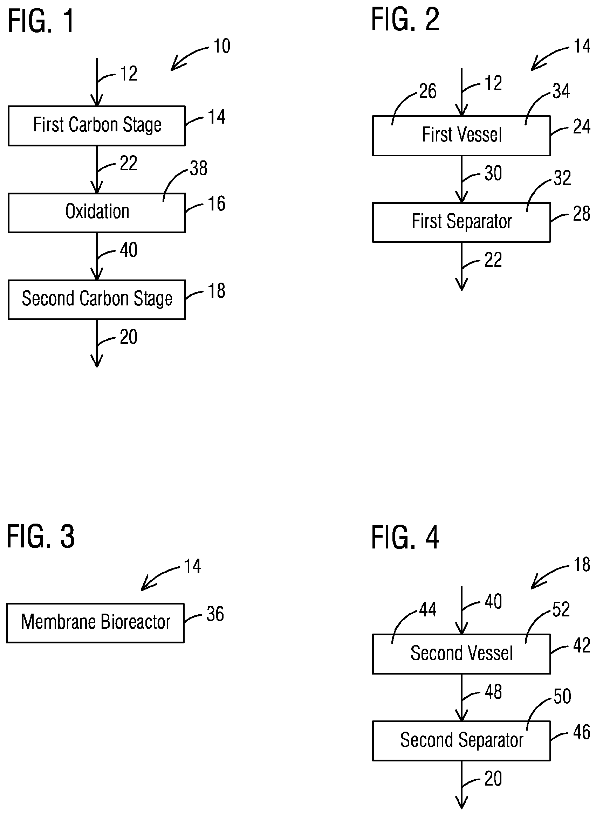

Now referring to the figures, FIG. 1 illustrates an embodiment of a water treatment system 10, which is not according to the invention and is present for illustration purposes only, for treating a wastewater stream 12 comprising an amount of chemical oxygen demand (COD) therein, which also reduces an overall carbon requirement for the system. As shown, the wastewater stream 12 flows through (in flow series) a first carbon stage 14, an oxidation unit 16, and a second carbon stage 18 to provide a treated stream 20 having an amount of COD below a maximum allowable limit (e.g., ≤ 50 mg/L, and in certain embodiments ≤ 30 mg/L). The wastewater stream 12 may refer to any fluid comprising an amount of chemical oxygen demand (COD) therein. In certain embodiments, the wastewater stream 12 may comprise one from an industrial, agricultural, or municipal source. In certain embodiments, the COD comprises an amount of organic and inorganic contaminants. In addition, in certain embodiments, the wastewater stream 12 is one that includes biodegradable contaminants, e.g., biodegradable organics, as well as recalcitrant organics, which are difficult to biodegrade and best removed from stream 12 by activated carbon and/or assisted by oxidation. In particular embodiments, the wastewater stream 12 may comprise a waste stream from a petrochemical production or a refinery process, such as an oil refinery process.

The first carbon stage 14 may comprise any suitable components in a configuration which at least utilizes an amount of activated carbon effective to reduce a first amount of chemical oxygen demand (COD) from the wastewater stream 12 and generate a first treated stream 22 having a first reduced amount of COD. In an embodiment and as shown in FIG. 2, to arrive at the first treated stream 22, the first carbon stage 14 comprises a first vessel 24 comprising a first amount of activated carbon 26 therein in fluid communication with a first separator 28. As used herein, vessel, e.g., 24, may be closed or open, such as by having an open top. The first amount of activated carbon 26 may comprise powdered activated carbon (PAC), granular activated carbon (GAC), or a combination thereof. In addition, the first amount of activated carbon 26 is effective to remove a first amount of chemical oxygen demand (COD) from the wastewater stream 12 and generate a first material 30. The first material 30 comprises a mixture of the first treated stream 22 and a first solids portion 32 comprising at least the first amount of activated carbon 26.

In certain embodiments and as shown in FIG. 2, which is not according to the invention and is present for illustration purposes only, a first amount of biomass 34 is also optionally combined or integrated with the activated carbon 26 in the first vessel 24 to reduce an amount of biodegradable COD in the wastewater stream 12. When the first vessel 24 comprises the first amount of biomass 34 therein, the first vessel 24 may be referred to as a bioreactor as known in the art and the solids portion 32 will thus include (used or spent) activated carbon and biomass. In such case, the first amount of biomass 34 degrades readily biodegradable COD while the first amount of activated carbon 26 is effective to remove an amount of recalcitrant organics in the wastewater stream 12 delivered to the first carbon stage 14. As used herein, recalcitrant organics define a class of organics which may be slow or difficult to biodegrade relative to the bulk of organics in the wastewater stream 12, for example, as defined by Standard Methods or EPA methods, for determining BOD₅ and the like.

The first amount of biomass 34 may include any suitable population of bacterial micro-organisms effective to digest biodegradable material, including one that does so with reduced solids production. Exemplary wastewater treatment with reduced solids production are described in U.S. Patent Nos. 6,660,163; 5,824,222; 5,658,458; and 5,636,755. The bacteria may comprise any bacteria or combination of bacteria suitable to thrive in anoxic and/or aerobic conditions. Representative aerobic genera include the bacteria *Acinetobacter, Pseudomonas, Zoogloea, Achromobacter, Flavobacterium, Norcardia, Bdellovibrio, Mycobacterium, Shpaerotilus, Baggiatoa, Thiothrix, Lecicothrix, and Geotrichum,* the nitrifying bacteria *Nitrosomonas*, and *Nitrobacter,* and the protozoa *Ciliata, Vorticella, Opercularia,* and *Epistylis.* Representative anoxic genera include the denitrifying bacteria *Achromobacter, Aerobacter, Alcaligenes, Bacillus, Brevibacterium,* Flavobacterium, Lactobacillus, *Micrococcus, Proteus, Pserudomonas,* and *Spirillum.*

Referring again to FIG. 2, the first separator 28 is in fluid communication with the first vessel 24 and is configured to receive the first material 30 within one or more inputs therein and then separate the first treated stream 22 (comprising a first reduced amount of COD from the wastewater stream 12) from the first solids portion 32 comprising at least the first amount of activated carbon 26. The first separator 28 may comprise any suitable structure employing a process effective to separate the first treated stream 22 from the solids portion 32. In an embodiment, the first separator 28 comprises one or more clarifiers, membrane units, combinations thereof or the like. The first separator 28 further includes at least an outlet for exit of the separated first treated stream 22 therefrom and delivery to the oxidation stage 16.

In certain embodiments, the first separator 28 comprises a clarifier as is well known in the art. In other embodiments, the first separator 28 comprises a dissolved gas unit, a hydrocyclone, or a membrane unit which may, for example, comprise one or more porous or semipermeable membranes. In an embodiment, the membrane unit comprises a microfiltration membrane or an ultrafiltration membrane as is known in the art. In addition, the membranes of the membrane unit may have any configuration suitable for its intended application, such as a sheet or hollow fibers or monolithic. Further, the membranes may have any suitable porosity and/or permeability for their intended application. Still further, the membranes may have any suitable shape and cross sectional area such as, for example, a square, rectangular, or cylindrical shape. In one embodiment, the membranes have a rectangular shape. In addition, the one or more membranes may be positioned, e.g., vertically, in a treatment zone of the membrane unit in such a way as to be completely submerged by the wastewater stream 12. In certain embodiments, the first vessel 24 and the first separator 28 comprise discrete individual components. It is understood, however, that the present invention is not so limited.

According to the invention and as shown in FIG. 3, the first vessel 24 (comprising activated carbon 26 and biomass 34) is integrated with the first separator 28 and comprise a single component, a membrane bioreactor 36, as is known in the art. In this case, the membrane bioreactor 36 of the first carbon stage 14 is configured to receive the wastewater stream 12, reduce an amount of COD in the wastewater stream 12 via contact with the first amount of activated carbon 26 and biomass 34, and separate the resulting first treated stream 22 from the first material 32 comprising activated carbon (and biomass) via one or more membranes as described herein housed within the membrane bioreactor 36. The first treated stream 22 exits an outlet of the membrane bioreactor 36 and is directed to the oxidation stage 16 (FIG. 1).

Referring again to FIG. 1, at the oxidation stage 16, the oxidation stage 16 may comprise one or more oxidation units 38, each configured for containing a volume of the first treated stream 22, if needed and oxidizing an amount of the COD in the first treated stream 22, thereby generating a second treated stream 40 therefrom comprising a second reduced amount of COD. The second reduced amount of COD is a reduced amount of COD relative to the first treated stream 22, and thus is a second reduced amount relative to the wastewater stream 12. In addition, the oxidation unit 38 comprises any suitable vessel and structure for delivering employing ozone, ultraviolet light, hydrogen peroxide, either separately or in any combination, such as by using ultraviolet light to enhance the action of hydrogen peroxide, or any other suitable technique for oxidizing contaminants contributing to the COD in the wastewater stream 12. Thus, in an embodiment, an oxidation process takes place at the oxidation stage 16 by subjecting a stream introduced thereto (e.g., first treated stream 22) to an oxidation process, such as by subjecting the first treated stream 22 to an effective amount of ozone, hydrogen peroxide, ultraviolet light at a suitable wavelength, or any other suitable oxidant/oxidizing agent or a combination thereof effective to reduce an amount of COD from the first treated stream 22 and generate a second treated stream 40 therefrom comprising a second reduced amount of COD.

As set forth above, the presence of the oxidation stage 16 substantially reduces a total carbon consumption needed in the system 10 to generate a final treated stream 20 having a COD concentration below a predetermined amount, e.g., below the stringent COD requirements. In an embodiment, the (final) treated stream 20 from a system or process as described herein comprises a COD concentration of 50 mg/L or less, and in a particular embodiment of 30 mg/L or less. The second reduced amount of COD of the second treated stream 40 comprises an increased fraction of biodegradable COD relative to the first treated stream 22 upon the subjecting the first treated stream 22 to an oxidation process. The increased biodegradable fraction renders the COD more easily reduced in the second carbon stage 18.

The second carbon stage 18, for example, as shown in the embodiment of Fig. 4, may comprise any suitable configuration as described herein for the first carbon stage 14. In the interest of brevity, each embodiment of the second carbon stage 18 will not be described below; however, it is understood that any description of the first carbon stage 14 may be likewise utilized for the second carbon stage 18. The difference between the first carbon stage 14 and the second carbon stage 18 lies in the fact that the first carbon stage 14 is disposed upstream of the oxidation stage 16 (oxidizing step) and the second carbon stage 18 is downstream thereof in the flow direction of the wastewater 12 being treated.

The second carbon stage 18 may likewise comprise any suitable structures in a configuration which utilizes at least a second amount of activated carbon to contact a stream therein (second treated stream 40) to reduce a third amount of chemical oxygen demand (COD) (relative the wastewater stream 12) and generate a final treated stream 20 having a third reduced amount of COD. In certain embodiments, the third reduced amount of COD is at or below a maximum allowable limit of the COD, e.g., < 50 mg/L. Similar to the first carbon stage 14, in certain embodiments (shown in FIG. 4), the second carbon stage 18 may similarly comprise a second vessel 42 comprising a second amount of activated carbon 44 therein and a second separator 46. The second amount of activated carbon 44 may comprise powdered activated carbon (PAC), granular activated carbon (GAC), or a combination thereof.

In addition, the second amount of activated carbon 44 is effective to remove a further amount of chemical oxygen demand (COD) from the wastewater stream 12 (now in the form of the second treated stream 40) and generate a second material 48. As with the first material 30, the second material 48 comprises a mixture of the third (final) treated stream 20 and a second solids portion 50 comprising at least the second amount of activated carbon 44. Likewise, the second carbon stage 18 may comprise a second separator 46 for separating the treated stream 20 from the second solids portion 50. As with the first carbon stage 14, the second vessel 42 includes a second amount of biomass 52 therein for treating readily biodegradable contaminants within the wastewater stream 12. Still further, in an embodiment, the second carbon stage 18 may comprise a membrane bioreactor comprising activated carbon 44 and biomass 52 therein with a plurality of membranes housed therein as was described above.

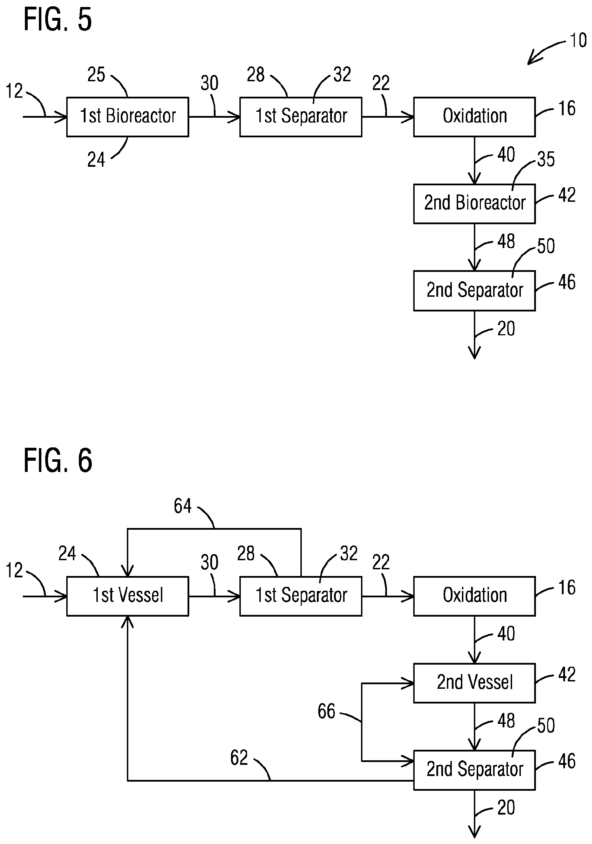

In view of the above, in accordance with an aspect and as shown in FIG. 5, which is not according to the invention and is present for illustration purposes only, the system 10 may comprise (in flow series) a first bioreactor 25 comprising a first amount of activated carbon and a first amount of biomass therein for generating the first material 30, a first separator 28 for separating the first material 30 into the first treated stream 22 and the first solids portion 32, an oxidation stage 16 for oxidizing components of the first treated stream to generate the second treated stream 40, and a second bioreactor 35 comprising a second amount of activated carbon and a second amount of biomass therein for generating the second material 48, a second separator 46 for separating the second 48 into the third (final) treated stream 20 and the second solids portion 50.

In accordance with another aspect, the activated carbon (and biomass) may be cycled through the system to limit the need for the addition of fresh carbon, which would add to the overall carbon consumption. Referring to FIG. 6, which is not according to the invention and is present for illustration purposes only, the system 10 may further comprise a conduit 62 in fluid communication between the second separator 46 and the first vessel 24 for delivery of at least a portion of the second solids portion 50 comprising activated carbon (and optionally biomass) from the second separator 46 to the first vessel 24. In addition, in certain embodiments, the system 10 may instead or further comprise a conduit 64 in fluid communication between the first separator 28 and the first vessel 24 for delivery of the at least a portion of the first solids portion 32 comprising activated carbon (and biomass) from the first separator 28 to the first vessel 24. Further, in certain embodiments, the system 10 may instead or further comprise a conduit 66 in fluid communication between the second separator 46 and the second vessel 42 for delivery of at least a portion of the second solids portion 50 comprising activated carbon (and biomass) from the second separator 46 to the second vessel 42. With any of conduits 62, 64, and/or 66, activated carbon (and biomass) may thus be reused within the system 10.

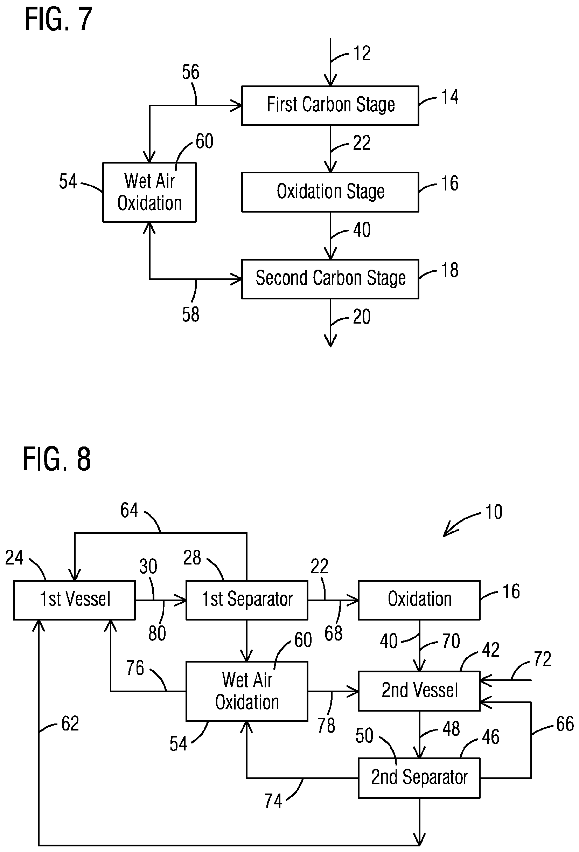

It is appreciated that at a certain point, the activated carbon in the first or second stage 14, 18 becomes "spent" - meaning that its ability to adsorb or otherwise remove chemical oxygen demand from the wastewater stream 12 becomes compromised. In accordance with another aspect of the present invention, the total carbon consumption of the system 10 is further minimized via addition of a WAO 54, which regenerates spent carbon from the first carbon stage 14 and second carbon stage 18, and recycle regenerated carbon to the first and second carbon stage 14, 18. Referring now to FIG. 7, there is the system 10 as previously described herein comprising, in a direction of flow of the wastewater stream, a first carbon stage 14, oxidation stage 16, and a second carbon stage 18. A treated stream 20 having a COD concentration below a predetermined threshold exits the second carbon stage 18. In certain embodiments, the treated stream 20 comprises a COD concentration of 50 mg/L or less, and in certain embodiments from 30 mg/L or less.

In accordance with an aspect of the present invention, when the activated carbon in the first carbon stage 14 and second carbon stage 18 comprises an amount of spent carbon, the system 10 further includes a WAO unit 54 (also shown in FIG. 7) for regenerating the spent carbon, thereby further reducing the need for added carbon in the system 10. As shown by the arrows 56, 58, following separation in the stages 14,18, the first solids portion 32 is directed to the WAO unit 54. Since biomass is also present in the first and second carbon stage 14, 18, the WAO unit 54 may also serve to destroy biological solids from the first solids portion 32 and second solids portion 50 delivered to the WAO unit 54. The WAO unit 54 comprises one or more dedicated reactor vessels in which WAO of the spent carbon material (and destruction of biomass) takes place at elevated temperature and pressure (relative to atmospheric conditions), and in the presence of oxygen.

In an embodiment, the WAO process is carried out at a temperature of 150 °C to 320 °C (275 °F to 608 °F) at a pressure of 10 to 220 bar (150 to 3200 psi). Further, in an embodiment, the material introduced to the WAO unit 54 may be mixed with an oxidant, e.g., a pressurized oxygen-containing gas supplied by a compressor. The oxidant may be added to the material (e.g., prior to and/or after flow of the material (solids portion 32 and/or 50) through a heat exchanger (not shown). Within the WAO unit 54, the material therein is subjected to conditions effective to oxidize contaminants adsorbed on the activated carbon, thereby regenerating the activated carbon material and destroying the biological material. A gaseous portion (offgas) may also be produced having an oxygen content. As shown by double sided arrows 56, 58, the regenerated carbon material 60 is recycled back to the first carbon stage 14 and second carbon stage 18, and well as receive material therefrom. To facilitate movement of the regenerated carbon material 60 through the system 10, the system may further include suitable fluid connections between the components of the system 10.

By way of example, FIG. 8 illustrates an embodiment, which is not according to the invention and is present for illustration purposes only, of a system 10 further comprising a WAO unit 54, particularly showing the flow of the components, including spent and regenerated carbon through the system. In this embodiment, the system 10 may comprise: a conduit 80 between the first vessel 24 and the first separator 28 for delivery of the first material 30 to the first separator 28; a conduit 64 between the first separator 28 and the first vessel 24 for recirculation of activated carbon (and biomass) therebetween; a conduit 68 between the first separator 28 and the oxidation stage 16 for delivery of the first treated stream 22 to the oxidation stage; a conduit 70 between the oxidation stage 16 and the second vessel 42 for delivery of the second treated stream 40 the second vessel 42; a conduit 72 for the introduction of fresh activated carbon into the second vessel 42; a conduit 66 between the second vessel 42 and the second separator 46 for delivery of the second material 48 to the second separator 46; a conduit 74 between the second separator 46 and the WAO unit 54 for delivery of the second solids portion 50 to the second separator 46; a conduit 76 between the WAO unit 54 and the first vessel 24 for recirculation/delivery of regenerated material 60 thereto; a conduit 78 between the WAO unit 54 and the second vessel 42 for recirculation of the regenerated material 60 to the second vessel; and/or a conduit 62 in fluid communication between the second separator 46 and the first vessel 24 for delivery of at least a portion of the second solids portion 50 comprising activated carbon (and biomass) from the second separator 46 to the first vessel 24. It is appreciated that the term "recirculation line" may be utilized with any of the conduits described herein as the conduits allow for repeated movement and reuse of materials through the system..

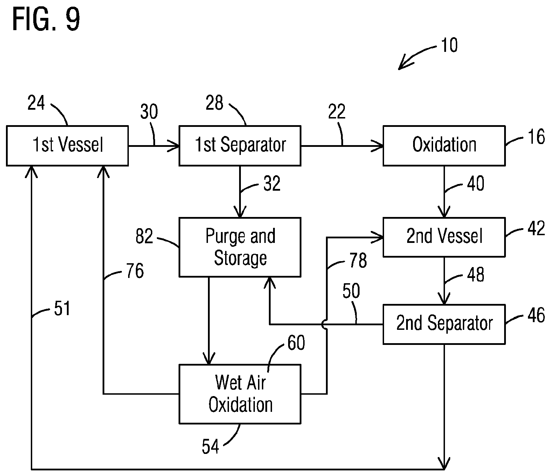

In accordance with an aspect of the present invention, any of the embodiments of the system 10 as described herein may further comprise suitable components within flow paths of any one of the conduits 60-80 for removing and storing (at least temporarily) any of the materials flowing therethrough. In an embodiment, for example and as shown in FIG. 9, which is not according to the invention and is present for illustration purposes only, the system 10 may further comprise a purge and storage system 82 to remove and store a portion of the first and/or second solids portions 32, 50 comprising activated carbon and optionally biomass from the first separator 28 and/or second separator 46. In addition, when present, the WAO unit 54 may be in fluid communication with the activated carbon and biomass purge and storage system 82 for regenerating an amount of spent activated carbon and destroying biomass delivered from the purge and storage system 82 to the WAO system 54. The purge and storage system 82 may comprise any suitable number of vessels and pumps delivering positive and/or negative pressure for storage and delivery of the desired materials. For example, spent activated carbon and/or biomass may be recycled 51 to the first vessel 24. From the WAO 54, regenerated carbon 60 may then be returned to the first vessel 24 and/or second vessel 42. In certain aspects, in any embodiment of a system 10 as described herein, the system 10 may further include a polishing unit (now shown) downstream of the second carbon stage for removing further COD and/or suspended solids therefrom. The polishing unit may comprise any suitable component, such as a membrane unit, reverse osmosis unit, ion exchange or the like.

To reiterate, the systems and processes for reducing the overall carbon consumption needed for the generation of low COD treated water. In certain aspects, the systems and processes described herein include an oxidation stage between a first activated carbon stage and a second activated carbon stage to reduce a total carbon consumption within the associated system or process. In certain aspects, the total carbon consumption is reduced due to an increased biodegradable COD portion as a result of an oxidation process (e.g., ozone treatment). As a result, a lesser amount of carbon is needed in the second stage (e.g., more biomass can be utilized). In this way, the total carbon consumption for the system may also be reduced.

## Claims

1. A water treatment system (10) comprising:
a first carbon stage (14) comprising a first vessel (24) containing at least a first amount of activated carbon (26) effective to reduce a first amount of chemical oxygen demand (COD) from a wastewater stream (12) and generate a first treated stream (22) having a first reduced amount of COD;
an oxidation unit (16) disposed downstream of the first carbon stage (14), the oxidation unit (16) configured to oxidize a second amount of COD from the first treated stream (22) and generate a second treated stream (40) having a second reduced amount of COD;
a second carbon stage (18) downstream of the oxidation unit (16) comprising a second vessel (42) containing at least a second amount of activated carbon (44) effective to reduce a third amount of chemical oxygen demand (COD) from the second treated stream (40) and generate a third treated stream (20) having a third reduced amount of COD at or below a predetermined concentration limit;
a wet air oxidation unit (54) configured to regenerate an amount of spent carbon input from the first carbon stage (14) and second carbon stage (18); and
a recirculation line (76, 78) for recycling an amount of regenerated carbon (60) from the wet air oxidation unit (54) to the first carbon stage (14) and second carbon stage (18);
wherein the first vessel (24) comprises a first membrane bioreactor (36) comprising the first amount of activated carbon (26), a first amount of biomass (34), and a plurality of membranes therein, the first membrane bioreactor (36) configured to remove the first amount of COD from the wastewater stream (12), generate a first material comprising the first treated stream (22) and a first solids portion (32) comprising the first amount of activated carbon (26) and biomass, and separate the first treated stream (22) from the first solids portion (32),
wherein the second carbon stage (18) further comprises an amount of biomass therein for reducing the third amount of COD, and
wherein the second reduced amount of COD of the second treated stream (40) further comprises at least one of an increased fraction of biodegradable COD and an overall decrease in COD relative to the first treated stream (22) upon oxidation of the first treated stream (22) in the oxidation unit.

2. The system of claim 1, wherein the oxidation unit (16) comprises an oxidation unit configured for subjecting the first treated stream (22) to at least one of an amount of ozone, hydrogen peroxide, and ultraviolet light effective to reduce the second amount of COD from the first treated stream (22).

3. The system of claim 1, wherein the second vessel (42) is configured to remove the second amount of COD from the wastewater stream (12) and generate a second material comprising the third treated stream (20) and a second solids portion (50) comprising the second amount of activated carbon (44); and
a second separator (46) in fluid communication with the second vessel (42), the second separator (46) configured to separate the third treated stream (20) from the second solids portion (50).

4. The system of claim 1, wherein the second vessel (42) comprises a second bioreactor (35), and wherein the second bioreactor (35) comprises the second amount of activated carbon (44) and a second amount of biomass (52) therein, the second bioreactor (35) configured to remove the third amount of COD from the wastewater stream (12) and generate a second material comprising the third treated stream (20) and a second solids portion (50) comprising the second amount of activated carbon (44) and biomass; and
a second separator (46) in fluid communication with the second bioreactor (35), the second separator (46) configured to separate third treated stream (20) and the second solids portion (50).

5. The system of claim 1, wherein the second vessel (42) comprises a second membrane bioreactor comprising the second amount of activated carbon (44), a second amount of biomass (52), and a plurality of membranes therein, the second membrane bioreactor configured to remove the third amount of COD from the second treated stream (40), generate the third treated stream (20) and the second material comprising the second amount of activated carbon (44) and biomass, and separate the third treated stream (20) from the second material.

## Patentansprüche

1. Wasseraufbereitungssystem (10) aufweisend:
eine erste Kohlenstoffstufe (14) mit einem ersten Behälter (24), der mindestens eine erste Menge an Aktivkohle (26) enthält, die wirksam ist, um eine erste Menge an chemischem Sauerstoffbedarf (COD) aus einem Abwasserstrom (12) zu reduzieren und einen ersten behandelten Strom (22) mit einer ersten reduzierten Menge an COD zu erzeugen;
eine Oxidationseinheit (16), die stromabwärts der ersten Kohlenstoffstufe (14) angeordnet ist, wobei die Oxidationseinheit (16) dazu eingerichtet ist, eine zweite Menge an COD aus dem ersten behandelten Strom (22) zu oxidieren und einen zweiten behandelten Strom (40) mit einer zweiten reduzierten Menge an COD zu erzeugen;
eine zweite Kohlenstoffstufe (18) stromabwärts der Oxidationseinheit (16), mit einem zweiten Behälter (42), der mindestens eine zweite Menge an Aktivkohle (44) enthält, die wirksam ist, um eine dritte Menge an chemischem Sauerstoffbedarf (COD) aus dem zweiten behandelten Strom (40) zu reduzieren und einen dritten behandelten Strom (20) mit einer dritten reduzierten Menge an COD bei oder unterhalb einer vorbestimmten Konzentrationsgrenze zu erzeugen;
eine Nassluft-Oxidationseinheit (54), die dazu eingerichtet ist, eine Menge an verbrauchtem Kohlenstoff, der aus der ersten Kohlenstoffstufe (14) und der zweiten Kohlenstoffstufe (18) zugeführt wird, zu regenerieren, und
eine Rückführleitung (76, 78) zur Rückführung einer Menge an regeneriertem Kohlenstoff (60) aus der Nassluft-Oxidationseinheit (54) in die erste Kohlenstoffstufe (14) und die zweite Kohlenstoffstufe (18);
wobei der erste Behälter (24) einen ersten Membranbioreaktor (36) umfasst, der die erste Menge an Aktivkohle (26), eine erste Menge an Biomasse (34) und eine Vielzahl von Membranen darin umfasst, wobei der erste Membranbiorektor (36) zum Entfernen der ersten Menge an COD aus dem Abwasserstrom (12), zum Erzeugen eines ersten Materials, das den ersten behandelten Strom (22) und einen ersten Feststoffanteil (32) umfasst, der die erste Menge an Aktivkohle (26) und Biomasse umfasst, und zum Trennen des ersten behandelten Stroms (22) vom ersten Feststoffanteil (32) eingerichtet ist,
wobei die zweite Kohlenstoffstufe (18) ferner eine Menge an Biomasse umfasst, um die dritte Menge an COD zu reduzieren, und
wobei die zweite reduzierte Menge an COD des zweiten behandelten Stroms (40) ferner mindestens einen erhöhten Anteil an biologisch abbaubarem COD und/oder eine Gesamtverringerung des COD im Vergleich zum ersten behandelten Strom (22) nach Oxidation des ersten behandelten Stroms (22) in der Oxidationseinheit umfasst.

2. Wasseraufbereitungssystem nach Anspruch 1, wobei die Oxidationseinheit (16) eine Oxidationseinheit umfasst, die dazu eingerichtet ist, den ersten behandelten Strom (22) mindestens einer Menge an Ozon, Wasserstoffperoxid und/oder ultraviolettem Licht auszusetzen, die wirksam ist, um die zweite Menge an COD aus dem ersten behandelten Strom (22) zu reduzieren.

3. Wasseraufbereitungssystem nach Anspruch 1, wobei der zweite Behälter (42) dazu eingerichtet ist, die zweite Menge an COD aus dem Abwasserstrom (12) zu entfernen und ein zweites Material zu erzeugen, das den dritten behandelten Strom (20) und einen zweiten Feststoffanteil (50) umfasst, der die zweite Menge an Aktivkohle (44) umfasst; und
einen zweiten Separator (46) in Fluidverbindung mit dem zweiten Behälter (42), wobei der zweite Separator (46) dazu eingerichtet ist, den dritten behandelten Strom (20) vom zweiten Feststoffanteil (50) zu trennen.

4. Wasseraufbereitungssystem nach Anspruch 1, wobei der zweite Behälter (42) einen zweiten Bioreaktor (35) umfasst, und wobei der zweite Bioreaktor (35) die zweite Menge an Aktivkohle (44) und eine zweite Menge an Biomasse (52) umfasst, wobei der zweite Bioreaktor (35) dazu eingerichtet ist, die dritte Menge an COD aus dem Abwasserstrom (12) zu entfernen und ein zweites Material zu erzeugen, das den dritten behandelten Strom (20) und einen zweiten Feststoffanteil (50) umfasst, der die zweite Menge an Aktivkohle (44) und Biomasse umfasst; und
ein zweiter Separator (46) in Fluidverbindung mit dem zweiten Bioreaktor (35), wobei der zweite Separator (46) dazu eingerichtet ist, den dritten behandelten Strom (20) und den zweiten Feststoffanteil (50) voneinander zu trennen.

5. Wasseraufbereitungssystem nach Anspruch 1, wobei der zweite Behälter (42) einen zweiten Membranbioreaktor umfasst, der die zweite Menge an Aktivkohle (44), eine zweite Menge an Biomasse (52) und eine Vielzahl von Membranen darin umfasst, wobei der zweite Membranbioreaktor dazu eingerichtet ist, die dritte Menge an COD aus dem zweiten behandelten Strom (40) zu entfernen, den dritten behandelten Strom (20) und das zweite Material, das die zweite Menge an Aktivkohle (44) und Biomasse umfasst, zu erzeugen und den dritten behandelten Strom (20) von dem zweiten Material zu trennen.

## Revendications

1. Système de traitement de l'eau (10), comprenant :
un premier étage de charbon (14) comprenant une première cuve (24) contenant au moins une première quantité de charbon actif (26) efficace pour réduire une première quantité de demande chimique en oxygène (DCO) d'un courant d'eau usée (12) et pour générer un premier courant traité (22) ayant une première quantité réduite de DCO ;
une unité d'oxydation (16) disposée en aval du premier étage de charbon (14), l'unité d'oxydation (16) étant configurée pour oxyder une seconde quantité de DCO du premier courant traité (22) et pour générer un deuxième courant traité (40) ayant une deuxième quantité réduite de DCO ;
un second étage de charbon (18) en aval de l'unité d'oxydation (16) comprenant une seconde cuve (42) contenant au moins une seconde quantité de charbon actif (44) efficace pour réduire une troisième quantité de demande chimique en oxygène (DCO) du deuxième courant traité (40) et pour générer un troisième courant traité (20) ayant une troisième quantité réduite de DCO égale ou inférieure à une limite de concentration prédéterminée ;
une unité d'oxydation par voie humide (54) configurée pour régénérer une quantité de charbon utilisé entrée à partir du premier étage de charbon (14) et du second étage de charbon (18) ; et
une conduite de recirculation (76, 78) servant à remettre en circulation une quantité de charbon régénéré (60) de l'unité d'oxydation par voie humide (54) au premier étage de charbon (14) et au second étage de charbon (18) ;
dans lequel le première cuve (24) comprend un premier bioréacteur à membranes (36) comprenant la première quantité de charbon actif (26), une première quantité de biomasse (34), et une pluralité de membranes en son sein, le premier bioréacteur à membranes (36) étant configuré pour éliminer la première quantité de DCO du courant d'eau usée (12), pour générer une première matière comprenant le premier courant traité (22) et une première partie de matières solides (32) comprenant la première quantité de charbon actif (26) et de biomasse, et pour séparer le premier courant traité (22) de la première partie de matières solides (32),
dans lequel le second étage de charbon (18) comprend en outre une quantité de biomasse en son sein destinée à réduire la troisième quantité de DCO, et
dans lequel la deuxième quantité réduite de DCO du second courant traité (40) comprend en outre au moins l'une d'une fraction augmentée de DCO biodégradable et d'une diminution globale de DCO par rapport au premier courant traité (22) lors d'une oxydation du premier courant traité (22) dans l'unité d'oxydation.

2. Système selon la revendication 1, dans lequel l'unité d'oxydation (16) comprend une unité d'oxydation configurée pour soumettre le premier courant traité (22) à au moins l'un d'une quantité d'ozone, d'un peroxyde d'hydrogène et d'une lumière ultraviolette efficace pour réduire la deuxième quantité de DCO du premier courant traité (22).

3. Système selon la revendication 1, dans lequel la seconde cuve (42) est configurée pour éliminer la deuxième quantité de DCO du courant d'eau usée (12) et pour générer une seconde matière comprenant le troisième courant traité (20) et une seconde partie de matières solides (50) comprenant la seconde quantité de charbon actif (44) ; et
un second séparateur (46) en communication fluidique avec la seconde cuve (42), le second séparateur (46) étant configuré pour séparer le troisième courant traité (20) de la seconde partie de matières solides (50).

4. Système selon la revendication 1, dans lequel la seconde cuve (42) comprend un second bioréacteur (35), et dans lequel le second bioréacteur (35) comprend la seconde quantité de charbon actif (44) et une seconde quantité de biomasse (52) en son sein, le second bioréacteur (35) étant configuré pour éliminer la troisième quantité de DCO du courant d'eau usée (12) et pour générer une seconde matière comprenant le troisième courant traité (20) et une seconde partie de matières solides (50) comprenant la seconde quantité de charbon actif (44) et de biomasse ; et
un second séparateur (46) en communication fluidique avec le second bioréacteur (35), le second séparateur (46) étant configuré pour séparer le troisième courant traité (20) et la seconde partie de matières solides (50).

5. Système selon la revendication 1, dans lequel la seconde cuve (42) comprend un second bioréacteur à membranes comprenant la seconde quantité de charbon actif (44), une seconde quantité de biomasse (52), et une pluralité de membranes en son sein, le second bioréacteur à membranes étant configuré pour éliminer la troisième quantité de DCO du deuxième courant traité (40), pour générer le troisième courant traité (20) et la seconde matière comprenant la seconde quantité de charbon actif (44) et de biomasse, et pour séparer le troisième courant traité (20) de la seconde matière.
